# EUROPEAN PATENT SPECIFICATION

(11) **EP 1 795 426 B1**
(45) Date of publication and mention of the grant of the patent: **26.05.2010**
(21) Application number: 06256240.0
(22) Date of filing: 07.12.2006
(51) Int. Cl.: B62D 1/18

(54) **Pivot connection device, steering assembly and method for assembling a steering assembly**
Schwenkverbindungsvorrichtung, Steueranordnung und Verfahren zum Zusammenbau einer Steueranordnung
Joint à pivot, ensemble de direction et procédé de montage correspondant

(30) Priority: 08.12.2005 GB 0525061
(43) Date of publication of application: 13.06.2007
(73) Proprietor: NSK Steering Systems Europe Limited, Silverstone Drive Rowley's Green, Coventry CV6 6PA (GB); NSK Ltd., Shinagawa-ku Tokyo (JP)
(72) Inventor: Choudhury, Dipesh, Coventry CV6 3LP (GB); Barton, Laurie, Leamington Spa CV32 5XA (GB); Lloyd, Carl, Great Barr, Birmingham B42 1QR (GB)
(74) Representative: Naylor, Matthew John

(56) References cited:
- EP-A1- 0 832 808
- DE-A1- 10 142 766
- DE-A1- 19 933 674
- DE-C1- 4 337 721
- GB-A- 990 128
- US-A- 5 509 325
- US-A1- 2005 217 407

## Description

The present invention relates to steering assemblies, particularly adjustable steering assemblies for cars, and methods for manufacturing such steering assemblies., The invention also relates to a pivot connection device for use in such a steering assembly.

Steering columns in modern cars are carefully designed in order to provide various operational functions. Many known steering columns allow the driver to adjust the position of the steering wheel by unclamping an adjustment mechanism, moving the steering column to desired position, and re-clamping the adjustment mechanism. Some steering columns allow the adjustment of both the rake (i.e. angle) of the steering wheel as well as the reach of the steering wheel. Furthermore, some steering columns are additionally provided with energy absorbing mechanisms to allow for controlled, energy-absorbing collapse of the steering mechanism in a crash condition.

DE 4337721 C1 discloses a cover for a gap on an adjustable steering column of a motor vehicle. A flexible covering element is provided for a changeable gap between the steering column (or a trim panel connected to the steering column) and an opposite wall of a dashboard support. The covering element, which forms a loop in its centre region, is connected at one end region to the steering column (or to the trim panel) and at the other end to the wall of the dashboard support. The loop of the covering element is formed within the gap and at least part of it is curved concavely towards the vehicle driver.

A typical steering assembly that has adjustability in both the rake and reach directions is shown in GB-A-2403692 and in Fig. 1.

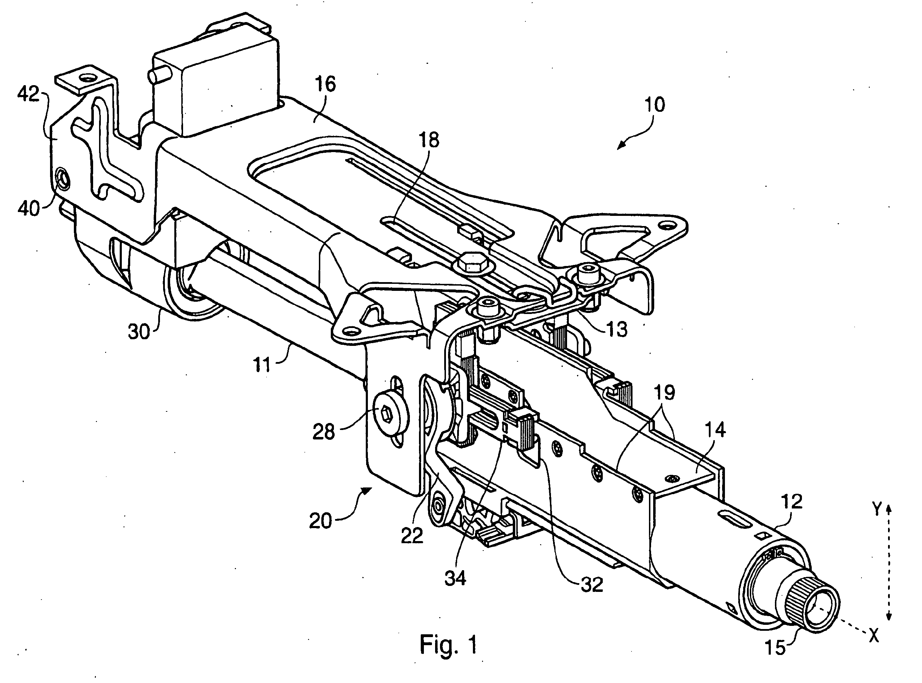

In Fig. 1, a main bracket 16 attaches to a cross beam (not shown) of the car (not shown). Thus, the main bracket 16 is substantially fixed in position. Depending from main bracket 16 is an adjustable clamping mechanism 20, fixed to a sliding bracket 13. Clamping bolt 28 can be loosened by rotation of lever 22, allowing adjustment of the position of the steering wheel (not shown) in the reach (X) and rake (Y) directions. In the following discussion, the "forward" end of the assembly is taken to be in the "forward" direction of the car (i.e. towards the front wheels) and the "rearward" end of the assembly is taken to be in the "rearward" direction of the car (i.e. towards the steering wheel).

An upper steering shaft 11 is attached at its front end to a mechanism (not shown) for directing the front wheels (not shown) of the car in a known manner. The rear end 15 of the upper steering shaft 11 is attached to a steering wheel (not shown).

The upper steering shaft 11 is retained at its forward end by forward bearing housing 30 and at its rearward end by rearward bearing housing 12. Rearward bearing housing 12 has a substantially cylindrical internal cross section, in view of the need to provide rotational bearing of the upper steering shaft 11.

Rearward bearing housing 12 is received within and welded to support housing 14, providing flat side walls 19 having attachment locations 32 for attachment of a series of reach adjustment slotted clutch plates 34 interleaved with a series of rake adjustment slotted clutch plates and the clamping bolt in the way described in GB-A-2403692.

The assembly shown in Fig. 1 is capable of ride-down in a crash condition, the sliding bracket 13 moving forwardly relative to the main bracket 16 along slot 18 in the way described in GB-A-2903692.

As will be clear, particularly for rake adjustment of the steering column, it is necessary for the steering column to pivot with respect to the main bracket. This is achieved by forward bearing housing 30 having a pivot connection 40 at a forward depending portion 42 of main bracket 16. A corresponding pivot connection (not shown) is formed at the opposite side of the main bracket and forward bearing housing. In this way, movement of the steering column along the Y (rake) direction in Fig. 1 is pivoted about an axis extending through pivot connection 40 and the corresponding pivot connection (not shown).

In order to provide an improved steering assembly, the inventors have proposed to form the forward bearing housing and the rearward bearing housing of the steering column in a single component. In such a steering assembly, it is necessary for the forward bearing housing to move relative to the main bracket both during reach adjustment as well as during rake adjustment. Thus, a simple pivoting motion between the forward bearing housing and the main bracket is not sufficient, since a sliding motion (to accommodate the reach adjustment) is also required.

Furthermore, in a further improved steering assembly, it may no longer be necessary to locate the forward bearing housing with respect to the main bracket. Instead, the support housing (reference number 14 in Fig. 1) may extend forwardly to provide pivoting and sliding attachment with respect to the forward portion of the main bracket.

The inventors have realised that a pivoting motion between two relatively rotatable metal surfaces such as the rotatable components discussed above can give rise to free play, rattle, poor feel and/or noise. This is undesirable.

US-A-5,596,907 discloses an antifriction element for use between two relatively sliding metal components of an adjustable steering column. The antifriction element takes the form of a slotted plastics liner, to fit into a corresponding slot in an adjustable steering column, with the clamping bolt of the adjustable steering column extending through the slot. The antifriction element has two arms extending away from the slot. When the steering column clamping mechanism is in the unclamped configuration, the arms urge the metal components apart, so that low-friction sliding can occur to adjust the position of the steering column. When the steering column is in the clamped configuration, however, the arms are pressed out of this urging position, and the metal components come into contact to ensure a high friction metal-to-metal contact. The purpose of this arrangement is to provide smooth adjustment in the unclamped configuration by separating the relatively moving metal parts.

US-A-5,655,413 discloses a similar antifriction element to US-A-5,596,907, except that resilient stops are provided at the ends of the slotted plastics liner, in order to provide a soft stop position to the user when adjusting the steering column position.

Accordingly, the present invention has been devised in order to address the problems associated with relative rotation between metal components. The present invention preferably addresses one or more of these problems in order to reduce, overcome or even eliminate them.

In a first aspect, the present invention provides a steering assembly as set out in claim 1.

Preferably, the connection member connects the first and second head portions via a snap-fit connection, typically requiring no relative rotation of the first and second head portions. For example, the connection member may have a deflectable barb configuration at its end extending away from the first head portion. The barb configuration may mate in a one-way engagement with a corresponding configuration in the second head portion. Preferably, the barb configuration is deflectable in a direction substantially perpendicular to the direction of extension of the connection member from the first head portion in order to engage positively with the corresponding configuration in the second head portion. In order to achieve this, the connection member may include one or more (preferably two or four) open-ended slots extending along the connection member and being open at the end extending away from the first head portion.

Preferably, a reinforcement member is provided internally of the connection member. For example, a metal pin may be provided along the axis of the connection member. Preferably, sufficient clearance is provided around the reinforcement member when the first and second head members are not yet connected so that the barb configuration may still deflect sufficiently to allow mating engagement of the connection member and the second head portion. The reinforcement member can act to provide reinforcement to the connection of the first and second metal components, for example against collision forces.

In use, the pivoting of the first and second metal components is taken up by relative rotation of the first and second head portions. In the case where the connection member is formed integrally with the first head portion, this pivoting movement is therefore taken up by relative rotation of the connection member and the second head portion, so that relative rotational sliding occurs at the interface between the connection member and the second head portion. Thus, it is preferred that relative rotation between the second head portion and the connection member does not result in a change in tension along the connection member.

Typically, the aperture formed in the first metal component receives at least a part of the first head portion. Preferably, this aperture is non-circular. More preferably, said at least a part of the first head portion has a shape so as to resist rotation of the first head portion with respect to the aperture. For example, the aperture may be of triangular, rectangular, square, etc. shape, and said at least a part of the first head portion may have a corresponding shape.

Similarly, the aperture formed in the second metal component may receive at least a part of the second head portion. Preferably, this aperture is non-circular. More preferably, said at least a part of the second head portion has a shape so as to resist rotation of the second head portion with respect to the aperture. For example, the aperture may be of triangular, rectangular, square, etc. shape, and said at least a part of the second head portion may have a corresponding shape.

In the case where it is desired to allow sliding movement of the first metal component relative to the second metal component, at least one of the apertures may be in the form of a slot, e.g. having longitudinally parallel faces. In that case, the corresponding head portion may have corresponding parallel faces to allow the head portion to slide along the slot but to resist rotation within the slot.

The first and second head portions may be joined by a linking member. Preferably, the linking member takes the form of a flexible strip. This allows the first and second head portions and the connection member to be formed integrally. In this way, handling of the device is improved, and manufacture of an assembly including the device is simplified. The length of the linking member is preferably greater than that required simply to link the first and second head portions together when the device is assembled in use to join the first and second metal components. Preferably, the length of the linking member also takes up relative rotation of the first and second members in use.

The biasing means may be formed to bias either the first head portion or the second head portion. In what follows, it is assumed that the biasing means biases the second head portion, but it is to be understood that the biasing means could equally well bias the first head portion.

The biasing means preferably includes a flexible arm or flange extending from the second head portion. Typically, the flexible arm is angled so that it is not perpendicular to a connection axis (extending through the second head portion) but also not parallel with that axis. At rest, the biasing means is preferably flexible in a direction away from the first head portion, when the device is assembled so that the first and second head portions are aligned along the connection axis.

The biasing means preferably includes two such flexible arms, provided on opposing sides of the second head portion, so as to provide a balanced bias to the device.

One of the flexible arms may have the linking member joined to it.

In use, it is necessary to press the first and second head portions towards each other to achieve engagement of the connection member with the second head portion and the interposition of the first and second metal components between the first and second head portions. This pressing typically flexes the flexible arm(s) out of the rest position. Consequently, the flexible arms urge the first and second metal components towards each other, to reduce the free play between those metal components.

Preferably, the first head portion and the connection member are formed in one piece. More preferably, as indicated above, the whole device (apart from the optional reinforcement member) is formed in one piece. The device may be formed from plastics material, e.g. by injection moulding. The reinforcement member may be located within the device at the time of injection moulding, i.e. the reinforcement member may be moulded-in.

Pivoting of the metal components relative to each other is taken up by relative rotation of the first head portion and second head portion. Most preferably, such relative rotation of the first head portion and the second head portion does not result in a change in tension in the pivot connection device, e.g. along the connection member.

Preferably, the aperture of at least one of the first and second metal components is a slot, e.g. having parallel faces. In this way, both translational relative motion (e.g. sliding) as well as pivoting relative motion can be achieved between the first and second metal components.

The first metal component may be fixed to a main bracket of the steering assembly. The second metal component may be fixed to a steering column whose position is adjustable relative to the main bracket. Preferably, the position of the steering column is adjustable in terms of both rake and reach.

In a second aspect, the present invention provides a method of assembling a steering assembly as set out in claim 15 .

Preferably, the pivot connection device is applied by aligning the respective apertures in the first and second metal components. Then the connection member may be pushed through the aligned apertures. Next, the second head portion may be located at the other side of the aligned apertures to the first head portion. Next, the connection member may be pushed into engagement with the second head member, thereby flexing the biasing means out of its rest position. After engagement of the connection member with the first head portion, the biasing means is typically unable to return to the rest position, and so urges the first and second metal components towards each other.

As will be understood by the skilled person, preferred or optional features of the first, second or third aspect may be applied to any aspect, and singly or in any combination.

Preferred embodiments of the invention will now be described, with reference to the accompanying drawings, in which;
Fig. 1 shows a schematic view of the known steering assembly of GB-A-2403692;
Fig. 2 shows a schematic view of a steering assembly according to the present invention, with a portion shown enlarged for clarity;
Fig. 3 shows a pivot connection device for use with an embodiment of the invention in a before-use state;
Fig. 4 shows the pivot connection device of Fig. 3 after assembly;
Fig. 5 shows a partial schematic view of a steering assembly according to the present invention before installation of a pivot connection device;
Fig. 6 shows the steering assembly of Fig 5 after installation of the pivot connection device.

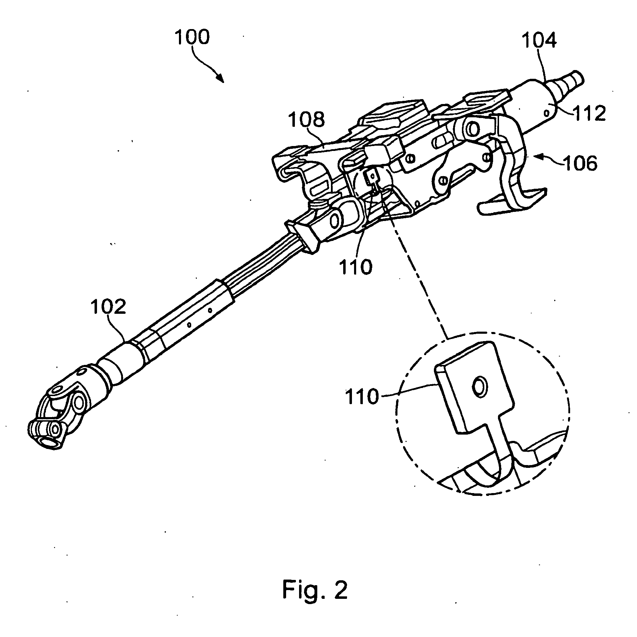

Fig. 2 shows a schematic view of a steering assembly 100 according to the present invention. The assembly includes a steering shaft 102, a rearward bearing housing portion 104, a clamping mechanism, shown generally by reference numeral 106, a main bracket 108 for fixing to a car cross beam (not shown). Also shown is a pivot connection device 110, pivotally attaching a depending portion of the main bracket 108 to forwardly extending arms of a support portion 112, the support portion being fixed to the rearward bearing housing portion 104. In the preferred embodiment, pivot connection device is a pivot liner.

Adjustment of the rake and reach position of the steering wheel (not shown) can be achieved by the user by unclamping the clamping mechanism in a known manner and manually moving the steering wheel and the attached steering column to the desired position. Adjustment of the rake and reach position of the steering wheel requires both pivoting and sliding of the extending arms of the support portion 112 with respect to the main bracket 108.

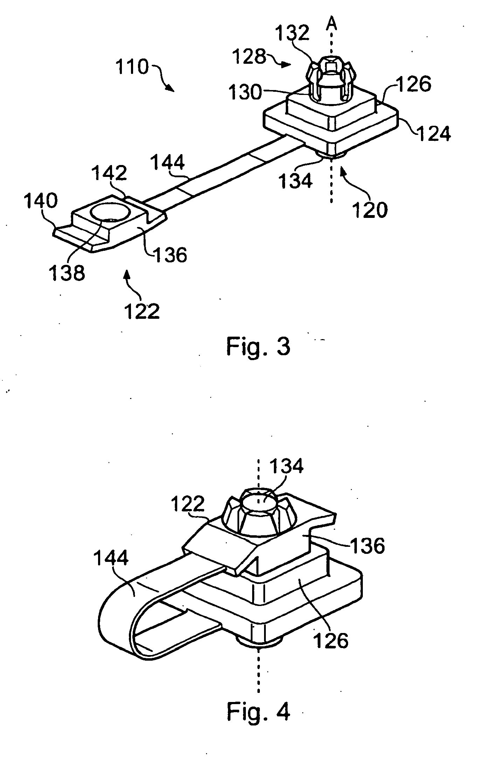

In the assembly illustrated in Fig. 2, this pivoting and sliding motion is improved by the use of pivot connection device 110, which will first be described with reference to Figs. 3 and 4.

As shown in Fig. 3, pivot connection device 110 has a first head portion 120 and a second head portion 122. First head portion 120 includes a flange 124 extending laterally from the head portion. First head portion 120 also includes aperture-engagement portion 126, having a substantially square profile. Extending along connection axis A from the first head portion 120 is connection member 128. Connection member 128 is formed in four parts, arranged symmetrically around connection axis A. Each part has a flexible stem portion 130 and a barb portion 132 formed at the free end of the connection member. A steel pin 134 is moulded into the first head portion 120 and projects part way along the connection member to provide reinforcement.

Second head portion 122 has an aperture-engaging portion 136 of similar profile to portion 126 of the first head portion. Second head portion 122 also has a receiving portion 138 formed through it. Receiving portion is adapted to receive the connection member 128 and provide a snap-fit connection thereto.

Second head portion 122 also has two angled flexible flanges 140, 142 extending laterally. These flexible flanges make up the biasing means of the pivot connection device.

First 120 and second 122 head portions are connected to each other via a flexible link member 144. This allows the device to be formed in one piece by injection moulding, including moulding-in of the reinforcement member 134. Furthermore, this allows the device to be handled easily during manufacture of the steering assembly.

Fig. 4 shows the pivot connection device in the assembled configuration. Second head portion 122 is brought into alignment with connection axis A. The connection member 128 is pressed into receiving portion 138, with the result that the barbs 132 deflect inwardly to allow their passage through the receiving portion. When they fully emerge on the far side of the second head portion, the barbs 132 snap outwardly into position, locking the first and second head portions together, with the reinforcing member 134 held within in the connecting member.

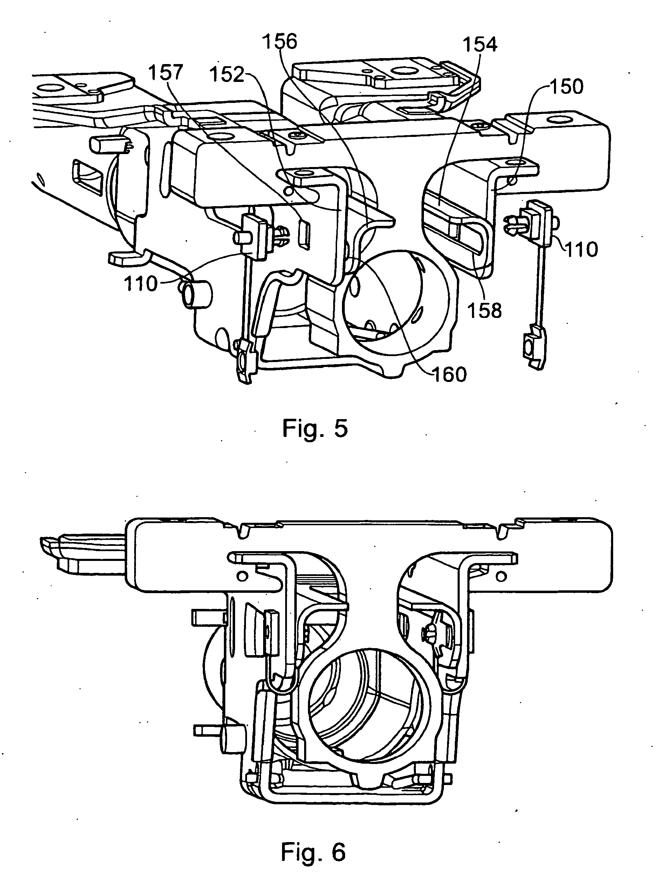

Turning now to Fig. 5, there is illustrated in part the forward part of the steering assembly, with the steering shaft 102 removed for clarity. Depending portions 150, 152 of the main bracket provide convenient attachment locations for forwardly extending arms 154, 156 of the support portion of the steering column. The depending portions 150, 152 of the main bracket have square apertures 157 formed therein at the attachment point. The forwardly extending arms 154, 156 of the support portion have elongate slots 158, 160 formed therein. The slots 158, 160 allow the support portion both to pivot and slide with respect to the main bracket. The purpose of the forwardly-extending arms 154, 156 is to assist in providing an anti-play pivoting for the steering column when the rake and reach position of the steering column is adjusted.

As shown in Fig. 5, pivot connection devices 110 may be located with the first head portions upwardly and the second head portions dangling downwardly by virtue of the link member 144. Aperture engagement portion 126 of the first head portion is then located in aperture 157, so that connection member 128 extends through aperture 157 and through slotted aperture 160. Second head portion 122 is then looped around and engaged with connection member 128, so that the aperture engaging portion 136 of the second head portion engages with the side faces of slotted aperture 160. In engaging the second head portion with the connection member, it is necessary to press the two head portions towards each other. This requires that the flexible flanges 140, 142 are flexed by being pressed against the surface of the forwardly extending arms of the support portion. After engagement of the second head portion with the connection member, the application pressure is released. The flexible flanges 140, 142 then urge the second member away from the forwardly extending arm of the support portion. However, the second head portion is restricted by its connection to the first head portion via the connection member. The consequence of this is that the metal components 150, 154 and 152, 156 are urged together, thereby reducing the clearance between them and reducing rattle, free play and improving the feel to the user of the relative movement between the components when adjusting the position of the steering wheel and also when the steering assembly is in the clamped configuration.

It will be understood from the foregoing that, when the steering column is pivoted with respect to the main bracket, the first head portion rotates relative to the second head portion. This is acceptable, and indeed provides a smoother pivoting feel to the user because the pivot connection device is formed from plastics. Furthermore, when the steering column is adjusted for reach by sliding of the steering column with respect to the main bracket, the pivot connection devices slide along the slotted apertures 158, 160 of the arms of the support portion. Again, this is acceptable, and the sliding of the plastics pivot connection device (actually the sliding of the second head portion within and adjacent the slotted aperture) may provide an improved feel to the movement of the steering column during adjustment of the position of the steering wheel.

Modifications of this embodiment, further embodiments and modifications thereof will be apparent to the skilled person on reading this disclosure and, as such, are within the scope of the invention.

## Claims

1. A steering assembly including a first metal component having an aperture and a second metal component having an aperture, said apertures being aligned and a pivot connection device (110) provided through said apertures to provide a pivot connection to allow pivoting of the first metal component relative to the second metal component about a pivoting axis, wherein the pivot connection device (110) includes a first head portion (120) and a second head portion (122) connected via a connection member (128) extending through the aligned apertures, the pivot connection device further including biasing means to urge the first and second metal components towards each other, **characterised in that** pivoting of the metal components relative to each other is taken up by relative rotation of the first head portion (120) and second head portion (122).

2. A steering assembly according to claim 1 wherein the connection member connects the first (120) and second (122) head portions via a snap-fit connection.

3. A steering assembly according to claim 1 or claim 2 wherein the connection member (128) has a deflectable barb configuration (132) at its end extending away from the first head portion (120) for mating in a one-way engagement with a corresponding configuration in the second head portion (122).

4. A steering assembly according to any one of claims 1 to 3 wherein a reinforcement member is provided internally of the connection member (128).

5. A steering assembly according to any one of claims 1 to 4 wherein the first (120) and second (122) head portions are joined by a linking member (144), the linking member (144) in use not following the same path through the metal components as the connection member (128).

6. A steering assembly according to any one of claims 1 to 5 wherein relative rotation of the first head portion (120) and the second head portion (122) does not result in a change in tension in the pivot connection device (110).

7. A steering assembly according to any one of claims 1 to 6 wherein the aperture of at least one of the first and second metal components is a slot.

8. A steering assembly according to any one of claims 1 to 7 wherein the first metal component is fixed to a main bracket of the steering assembly and the second metal component is fixed to a steering column whose position is adjustable relative to the main bracket.

9. A steering assembly according to any one of claims 1 to 8 wherein the biasing means of the pivot connection device (110) biases either the first head portion (120) away from the first metal component or the second head portion (122) away from the second metal component, or both, so that when the first (120) and second (122) head portions are connected via the connection member through the aligned apertures in the metal components, the biasing means urges the first and second metal components towards each other.

10. A steering assembly according to any one of claims 1 to 9 wherein the biasing means includes a flexible angled flange extending laterally from the second (122) or first (120) head portion.

11. A steering assembly according to any one of claims 1 to 10 wherein, at rest, the biasing means is flexible in a direction away from the first head portion (120), but urges towards the first head portion (120), when the pivot connection device (110) is assembled so that the first (120) and second (122) head portions are aligned along a connection axis.

12. A steering assembly according to any one of claims 1 to 11 wherein the biasing means includes two flexible flanges (140, 142), provided on opposing sides of the second head portion (122).

13. A steering assembly according to any one of claims 1 to 12 wherein at least a part of the first head portion (120) has a shape so as to resist rotation of the first head portion (120) with respect to the aperture in the first metal component.

14. A steering assembly according to any one of claims 1 to 13 wherein at least a part of the second head portion (122) has a shaped so as to allow sliding of the device along the slot in the second metal component, but to resist rotation within the slot.

15. A method of assembling a steering assembly according to any one of claims 1 to 14, **characterised by** including the steps of pivotally connecting the first and second components using the pivot connection device (110).

16. A method according to claim 15 wherein the pivot connection device (110) is applied by:
aligning the respective apertures in the first and second metal components;
pushing the connection member (128) through the aligned apertures;
locating the second head portion (122) at the other side of the aligned apertures to the first head portion (120);
pushing the connection member (128) into engagement with the second head member (122), thereby flexing the biasing means out of its rest position against the first or second metal component, thereby urging the first and second metal components towards each other.

## Patentansprüche

1. Lenkanordnung, enthaltend ein erstes Metallbauteil, das eine Öffnung hat, und ein zweites Metallbauteil, das eine Öffnung hat, wobei die Öffnungen ausgerichtet sind, und eine Schwenkverbindungsvorrichtung (110), die die Öffnungen durchlaufend vorgesehen ist, um eine Schwenkverbindung bereitzustellen, die ein Schwenken des ersten Metallbauteils im Bezug auf das zweite Metallbauteil um eine Schwenkachse erlaubt, wobei die Schwenkverbindungsvorrichtung (110) einen ersten Kopfabschnitt (120) und einen zweiten Kopfabschnitt (122) enthält, die über ein Verbindungselement (128) verbunden sind, das sich durch die ausgerichteten Öffnungen erstreckt, wobei die Schwenkverbindungsvorrichtung weiterhin ein Vorspannelement enthält, das das erste und das zweite Metallbauteil zueinander drückt, **dadurch gekennzeichnet, dass** das Schwenken der Metallbauteile relativ zueinander durch eine Relativdrehung des ersten Kopfabschnittes (120) und des zweiten Kopfabschnittes (122) aufgenommen wird.

2. Lenkanordnung nach Anspruch 1, bei der das Verbindungselement den ersten (120) und den zweiten (122) Kopfabschnitt über eine Einrastverbindung verbindet.

3. Lenkanordnung nach Anspruch 1 oder Anspruch 2, bei der das Verbindungselement (128) einen biegbaren Dornaufbau (132) an seinem Ende hat, das sich von dem ersten Kopfabschnitt (120) wegerstreckt, der einen Einwegeingriff mit einem entsprechenden Aufbau in dem zweiten Kopfabschnitt (122) herstellt.

4. Lenkanordnung nach einem der Ansprüche 1 bis 3, bei der ein Verstärkungselement im Inneren des Verbindungselementes vorgesehen ist.

5. Lenkanordnung nach einem der Ansprüche 1 bis 4, bei der der erste (120) und der zweite (122) Kopfabschnitt durch ein Brückenelement (144) verbunden sind, wobei das Brückenelement (144) in Verwendung nicht demselben Weg durch die Metallbauteile folgt wie das Verbindungselement (128).

6. Lenkanordnung nach einem der Ansprüche 1 bis 5, bei der die Relativdrehung des ersten Kopfabschnittes (120) und des zweiten Kopfabschnittes (122) nicht zu einer Änderung der Spannung in der Schwenkverbindungsvorrichtung (110) führt.

7. Lenkanordnung nach einem der Ansprüche 1 bis 6, bei der die Öffnung des ersten und/oder zweiten Metallbauteils ein Schlitz ist.

8. Lenkanordnung nach einem der Ansprüche 1 bis 7, bei der das erste Metallbauteil an einer Hauptkonsole der Lenkanordnung angebracht ist und das zweite Metallbauteil an einer Lenksäule angebracht ist, deren Stellung im Bezug auf die Hauptkonsole eingestellt werden kann.

9. Lenkanordnung nach einem der Ansprüche 1 bis 8, bei der die Vorspanneinrichtung der Schwenkverbindungsvorrichtung (110) den ersten Kopfabschnitt (120) weg von dem ersten Metallbauteil und/oder den zweiten Kopfabschnitt (122) weg von dem zweiten Metallbauteil vorspannt, so dass, wenn der erste (120) und der zweite (122) Kopfabschnitt über das Verbindungselement durch die ausgerichteten Öffnungen in den Metallbauteilen verbunden sind, die Vorspanneinrichtung das erste und das zweite Metallbauteil zueinander drückt.

10. Lenkanordnung nach einem der Ansprüche 1 bis 9, bei der die Vorspanneinrichtung einen flexiblen, abgewinkelten Flansch enthält, der sich seitlich von dem zweiten (122) oder dem ersten (120) Kopfabschnitt erstreckt.

11. Lenkanordnung nach einem der Ansprüche 1 bis 10, bei der in der Ruhestellung die Vorspanneinrichtung in einer Richtung abgewandt vom ersten Kopfabschnitt (120) flexibel ist, jedoch zum ersten Kopfabschnitt (120) drückt, wenn die Schwenkverbindungsvorrichtung (110) zusammengesetzt ist, so dass der erste (120) und der zweite (122) Kopfabschnitt entlang einer Verbindungsachse ausgerichtet sind.

12. Lenkanordnung nach einem der Ansprüche 1 bis 11, bei der die Vorspanneinrichtung zwei flexible Flansche (140, 142) enthält, die auf gegenüberliegenden Seiten des zweiten Kopfabschnittes (122) vorgesehen sind.

13. Lenkanordnung nach einem der Ansprüche 1 bis 12, bei der wenigstens ein Teil des ersten Kopfabschnittes (120) so ausgebildet ist, dass er einer Drehung des ersten Kopfabschnittes (120) im Bezug auf die Öffnung im ersten Metallbauteil widersteht.

14. Lenkanordnung nach einem der Ansprüche 1 bis 13, bei der wenigstens ein Teil des zweiten Kopfabschnittes (122) derart ausgebildet ist, dass er eine Verschiebung der Vorrichtung entlang des Schlitzes im zweiten Metallbauteil gestattet, jedoch einer Drehung innerhalb des Schlitzes widersteht.

15. Verfahren zum Zusammensetzen einer Lenkanordnung nach einem der Ansprüche 1 bis 14, **dadurch gekennzeichnet, dass** es die Schritte des Schwenkverbindens des ersten und des zweiten Bauteils mit Hilfe der Schwenkverbindungsvorrichtung (110) umfasst.

16. Verfahren nach Anspruch 15, bei dem die Schwenkverbindungsvorrichtung (110) eingerichtet wird durch:
- Ausrichten der entsprechenden Öffnungen in dem ersten und dem zweiten Metallbauteil;
- Drücken des Verbindungselementes (128) durch die ausgerichteten Öffnungen;
- Anordnen des zweiten Kopfabschnittes (122) an der anderen Seite der ausgerichteten Öffnungen zu dem ersten Kopfabschnitt (120);
- Drücken des Verbindungselementes (128) in einen Eingriff mit dem zweiten Kopfelement (122), wodurch die Vorspanneinrichtung aus ihrer Ruhestellung gegen das erste oder das zweite Metallbauteil gebogen wird, wodurch das erste und das zweite Metallbaufteil zueinander gedrückt werden.

## Revendications

1. Ensemble de direction comportant un premier composant métallique ayant une ouverture et un deuxième composant métallique ayant une ouverture, lesdites ouvertures étant alignées, et un dispositif de connection pivotant (110) est réalisé à travers ladite ouverture pour établir une connection pivotante pour permettre le pivotement du premier composant métallique par rapport au deuxième composant métallique autour d'un axe de pivotement, où le dispositif de connection pivotant (110) comporte une première portion de tête (120) et une deuxième portion de tête (122) connectée par un élément de connection (128) s'étendant à travers les ouvertures alignées, le dispositif de connection pivotant comportant en outre des moyens de sollicitation pour solliciter les premier et deuxième composants métalliques l'un vers l'autre, **caractérisé en ce que** le pivotement des composants métalliques l'un relativement à l'autre est rattrapé par la rotation relative de la première portion de tête (120) et de la deuxième portion de tête (122).

2. Ensemble de direction selon la revendication 1, dans lequel l'élément de connection relie les première (120) et deuxième (122) portions de tête par une connection à encliquetage.

3. Ensemble de direction selon la revendication 1 ou la revendication 2, dans lequel l'élément de connection (128) possède une configuration de barbe (132) apte à être déviée à son extrémité s'étendant au loin de la première portion de tête (120) en vue d'un appariement selon un engagement à une voie avec une configuration correspondante dans la deuxième portion de tête (122).

4. Ensemble de direction selon l'une quelconque des revendications 1 à 3, dans lequel un élément de renforcement est réalisé à l'intérieur de l'élément de connection (128).

5. Ensemble de direction selon l'une quelconque des revendications 1 à 4, dans lequel les première (120) et deuxième (122) portions de tête sont reliées par un élément de liaison (144), l'élément de liaison (144), en cours d'utilisation, ne suivant pas le même chemin à travers les composants métalliques que l'élément de connection (128).

6. Ensemble de direction selon l'une quelconque des revendications 1 à 5, dans lequel la rotation relative de la première portion de tête (120) et de la deuxième portion de tête (122) ne se traduit pas par un changement de tension dans le dispositif de connection pivotant (110).

7. Ensemble de direction selon l'une quelconque des revendications 1 à 6, dans lequel l'ouverture d'au moins un parmi les premier et deuxième composants métalliques est une fente.

8. Ensemble de direction selon l'une quelconque des revendications 1 à 7, dans lequel le premier composant métallique est fixé à un support principal de l'ensemble de direction, et le deuxième composant métallique est fixé à une colonne de direction dont la position est ajustable relativement au support principal.

9. Ensemble de direction selon l'une quelconque des revendications 1 à 8, dans lequel le moyen de sollicitation du dispositif de connection pivotant (110) sollicite soit la première portion de tête (120) au loin du premier composant métallique soit la deuxième portion de tête (122) au loin du deuxième composant métallique, ou les deux, de sorte que lorsque les première (120) et deuxième (122) portions de tête sont reliées par l'élément de connection à travers les ouvertures alignées dans les composants métalliques, le moyen de sollicitation sollicite les premier et deuxième composants métalliques l'un vers l'autre.

10. Ensemble de direction selon l'une quelconque des revendications 1 à 9, dans lequel le moyen de sollicitation comporte une bride angulaire flexible s'étendant latéralement depuis la deuxième (122) ou ²première (120) portion de tête.

11. Ensemble de direction selon l'une quelconque des revendications 1 à 10, dans lequel, au repos, le moyen de sollicitation est flexible dans une direction au loin de la première portion de tête (120) mais sollicite vers la première portion de tête (120) lorsque le dispositif de connection pivotant (110) est assemblé de sorte que les première (120) et deuxième (122) portions de tête sont alignées le long d'un axe de connection.

12. Ensemble de direction selon l'une quelconque des revendications 1 à 11, dans lequel le moyen de sollicitation comporte deux brides flexibles (140, 142) réalisées sur des côtés opposés de la deuxième portion de tête (122).

13. Ensemble de direction selon l'une quelconque des revendications 1 à 12, dans lequel au moins une partie de la première portion de tête (120) a une forme pour résister à la rotation de la première portion de tête (120) par rapport à l'ouverture dans le premier composant métallique.

14. Ensemble de direction selon l'une quelconque des revendications 1 à 13, dans lequel au moins une partie de la deuxième portion de tête (122) a une forme permettant le coulissement du dispositif le long de la fente dans le deuxième composant métallique, mais pour résister à la rotation dans la fente.

15. Procédé d'assemblage d'un ensemble de direction selon l'une quelconque des revendications 1 à 14, **caractérisé en** comprenant les étapes consistant à relier d'une manière pivotante les premier et deuxième composants en utilisant le dispositif de connection pivotant (110).

16. Procédé selon la revendication 15, dans lequel le dispositif de connection pivotant (110) est appliqué par:
aligner les ouvertures respectives dans les premier et deuxième composants métalliques;
pousser l'élément de connection (128) à travers les ouvertures alignées;
localiser la deuxième portion de tête (122) à l'autre côté des ouvertures alignées à la première portion de tête (120) ;
pousser l'élément de connection (128) en prise avec le deuxième élément de tête (122) en faisant fléchir ainsi le moyen de sollicitation hors de sa position de repos contre le premier ou deuxième composant métallique, en sollicitant ainsi les premier et deuxième composants métalliques l'un vers l'autre.
